# EUROPEAN PATENT SPECIFICATION

(11) **EP 1 758 317 B1**
(45) Date of publication and mention of the grant of the patent: **08.09.2010**
(21) Application number: 05771595.5
(22) Date of filing: 25.07.2005
(51) Int. Cl.: H04L 12/56, H04L 12/18

(54) **A METHOD FOR ACTIVATING THE OPERATION OF THE MULTIMEDIA BROADCAST/MULTICAST SERVICE**
EIN VERFAHREN ZUR AKTIVIERUNG DER NUTZUNG DES MULTIMEDIA BROADCAST/MULTICAST-DIENSTES
PROCEDE D'ACTIVATION DU FONCTIONNEMENT D'UN SERVICE DE DIFFUSION/MULTIDIFFUSION DE MULTIMEDIA

(30) Priority: 23.07.2004 CN 200410070884
(43) Date of publication of application: 28.02.2007
(73) Proprietor: Huawei Technologies Co., Ltd., Longgang District, Shenzhen Guangdong 518129 (CN)
(72) Inventor: ZHANG, Hai, Shenzhen Guangdong 518129 (CN)
(74) Representative: Reinhard - Skuhra - Weise & Partner GbR
(86) International application number: PCT/CN2005/001110
(87) International publication number: WO 2006/007800

(56) References cited:
- WO-A-2004/034655
- WO-A1-2004/034655
- WO-A1-2004/036837
- KR-A- 2004 014 706
- US-A1- 2004 137 885
- 3GPP: "TS 23.246 V.6.3.0 Multimedia Broadcast/Multicast Service (MBMS), Architecture and functional description" 3RD GENERATION PARTNERSHIP PROJECT, [Online] June 2004 (2004-06), pages 1-41, XP002457236 Sophia Antipolis, France Retrieved from the Internet: URL:http://www.3gpp.org/ftp/Specs/archive/ 23_series/23.246/23246-630.zip> [retrieved on 2007-10-30]
- HUAWEI, CHINA MOBILE: "Clarification of BM-SC create MBMS UE Context" CHANGE REQUEST TS 23.246 TDOC S2-042854, 18 August 2004 (2004-08-18), pages 1-5, XP002457237
- LEOLEIS G ET AL: "Mobility management for multicast sessions in a UMTS-IP converged environment" COMPUTERS AND COMMUNICATIONS, 2004. PROCEEDINGS. ISCC 2004. NINTH INTERNATIONAL SYMPOSIUM ON ALEXANDRIA, EGYPT JUNE 28 - JULY 1, 2004, PISCATAWAY, NJ, USA,IEEE, vol. 1, 28 June 2004 (2004-06-28), pages 506-511, XP010741969 ISBN: 0-7803-8623-X

## Description

### Field of the Technology

The present invention relates to the technique of service activation, and particularly, to methods for activating Multimedia Broadcast/Multicast Service (MBMS).

### Background of the Invention

With development of the third generation (3G) mobile communication technology, 3G mobile communication provides services with higher data rate than the second generation mobile communication and thus supports various types of services, such as video telephone, graphic downloading, high-speed internet surfing, etc. And one type of such services features in transferring the service simultaneously to all its subscribers in a wireless network, such as weather forecast, news clips, collection of sports game, etc. Thus the concept of broadcast/multicast is introduced into 3G mobile communication.

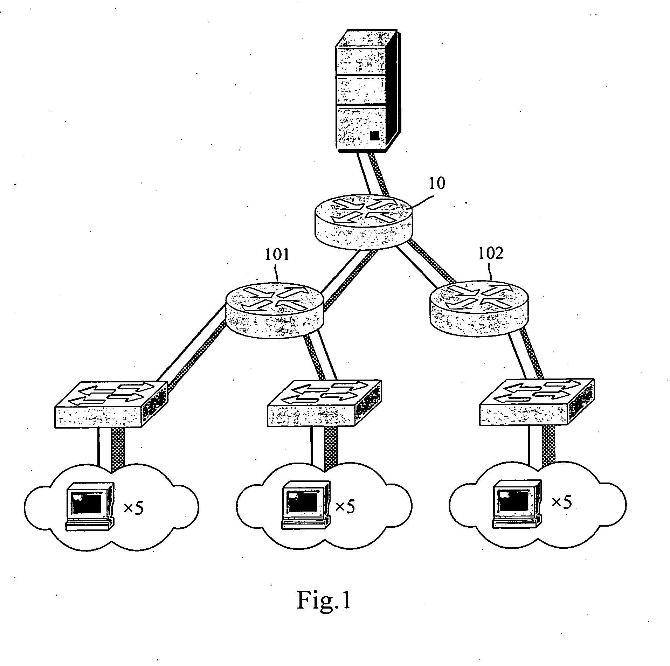

Referring to Fig.1, for an intermediate node such as node 10, the upstream node of node 10 sends only one set of data to node 10 no matter how many downstream nodes of node 10 are expecting to receive data; after receiving the data, node 10 replicates it based on the number of its downstream nodes which are expecting to receive the data, and sends a set of the data to each of these downstream nodes, for example, node 101 and 102 are the downstream nodes of node 10 and are expecting to receive the data, therefore node 10 reproduces two sets of the received data. In this way, every branch of the data transmission tree of broadcast/multicast service transfers only one set of data and occupies only one share of transmission resources, and the data transmission between the root node and its corresponding downstream nodes is operated likewise. The difference between multicast service and broadcast service is that multicast service provider sends corresponding information only to the subscribers of certain information while broadcast service provider sends information to all the users in the wireless network. It can be concluded from the above description that through sending the same information to multiple users simultaneously, broadcast/multicast service can largely save network resources.

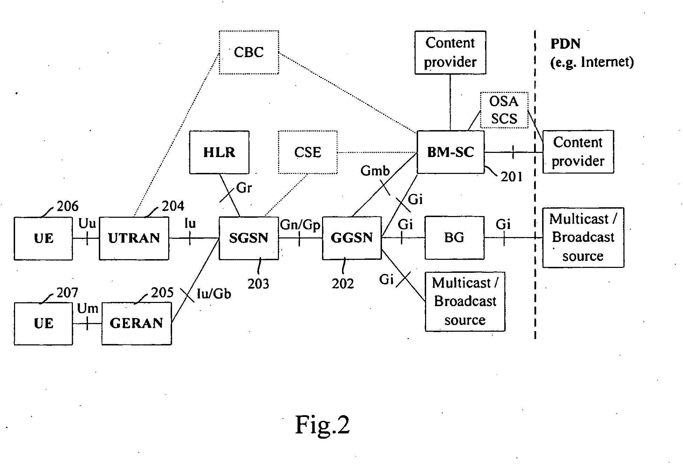

Fig.2 is a schematic diagram illustrating the structure of a wireless network supporting broadcast/multicast service. It is shown in Fig.2 that in the 3G Partner Project (3GPP), the supporting unit of broadcast/multicast service in a wireless network is the Broadcast/Multicast Service Center (BM-SC) 201 which is connected to the Gateway GPRS Support Node (GGSN) 202 through Gmb interface or Gi interface. A BM-SC 201 may be connected to a number of the GGSNs 202, each of which is connected to one or more Serving GPRS Support Nodes (SGSN) 203 through Gn/Gp interface. The SGSN 203 is connected to the Universal Mobile Telecommunications System (UMTS) Terrestrial Radio Access Network (UTRAN) 204 through Iu interface. The UTRAN 204 is connected to the User Equipment (UE) 206 through Uu interface. The SGSN 203 may also be connected to the GSM/EDGE radio access network (GERAN) 205 of the Global System for Mobile communications (GSM) through Iu/Gb interface, and then GERAN 205 is connected to the UE 207 through Um interface. Among the above nodes, the GGSNs and the SGSNs are in the core network (CN) of the wireless network.

In a network illustrated by Fig.2, a user subscribes to an MBMS bearer service through an MBMS activation process such that the network may record the user who wishes to receive a certain MBMS bearer service. Through the MBMS registration process, the network nodes establish a transmission distribution tree from the BM-SC to BSC/RNC through the GGSN and the SGSN such that the properties of an MBMS session and the data thereof could be allowed to transfer.

Through the MBMS bearer service activation process the user is registered in the network and is thus authorized to receive the data of a certain MBMS bearer service. The activation process is a signaling process between the UE and the network, which creates an MBMS UE context in the UE, the SGSN, the GGSN and BSC/RNC for every user who activates an MBMS bearer service. The creation of an MBMS UE context is similar to the creation of a common packet data protocol (PDP) context. The MBMS UE context comprises a piece of specific information indicating a certain MBMS bearer service to which the UE has subscribed. When the UE joins an MBMS bearer service, an MBMS UE context shall be created in the UE, the SGSN and the GGSN. In the UE and the SGSN, the MBMS UE context is saved as part of the MM context of the UE; in the GGSN, the MBMS UE context is saved separately. Every MBMS bearer service which the UE joins will have an MBMS UE context.

As show in Table1, the MBMS UE context includes IP multicast address, APN, TMGI, Linked network service access point identifier (NSAPI) and IMSI, etc. Among them, the IP multicast address identifies the MBMS bearer service which the UE has joined; APN is the defined access point name of the IP multicast address; TMGI is the temporary mobile group identifier to which the MBMS bearer service is assigned; Linked NSAPI is the NSAPI of the PDP context used by the UE to bear IGMP/MLD signaling; IMSI is the user identifier; and MBMS NSAPI is used to identify an MBMS UE context.

**Table 1**

| Parameter | Definition | UE | SGSN | GGSN | RNC | BSC | BM-SC |
|---|---|---|---|---|---|---|---|
| IP multicast address | IP multicast address identifies the MBMS bearer service which the UE has joined | X | X | X | X | Iu - X Gb - to be defined | X |
| APN | The defined access point name of the IP multicast address | X | X | X | X | Iu - X Gb - to be defined | X |
| TMGI | Temporary mobile group identifier to which the MBMS bearer service is assigned | X | | | | | |
| Linked NSAPI | NSAPI of the PDP context used by the UE to bear IGMP/MLD signaling | X | X | | | | |
| IMSI | IMSI identifies the user | (1) | (1) | X | (2) | to be defined | X |
| TI | Transaction identifier | X | X | | | | |
| MBMS_NSAPI | Service access point of the network layer, identifying an MBMS UE context | X | X | X | | | |

In Table 1, (1) means that in the UE and SGSN, the IMSI is available within the MM Context which contains the MBMS UE Context ; (2) means that the IMSI is available within the UE Context which contains the MBMS UE Context.

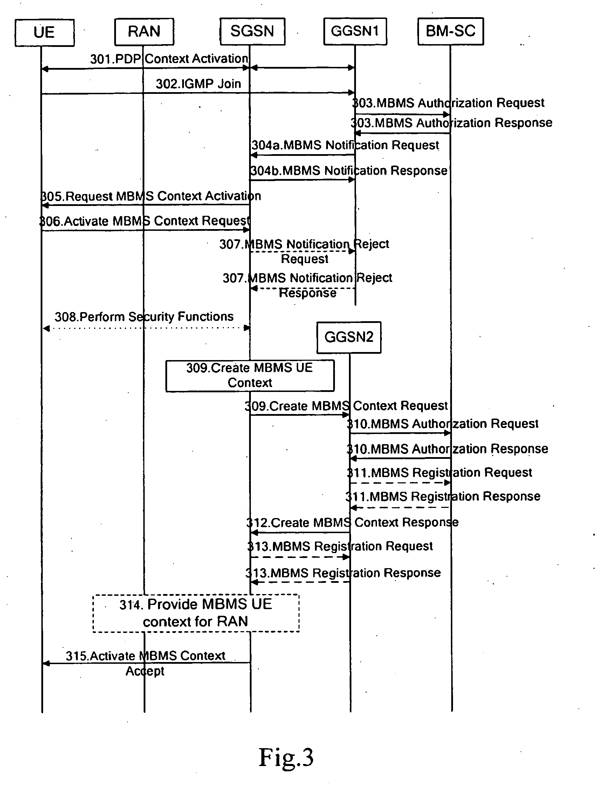

The activation process of an MBMS bearer service in the prior art, as shown in Fig.3, comprises the following steps:

Step 301: the UE firstly interacts with the network to create a PDP context (PDP Context Activation) when the UE needs to activate a certain MBMS bearer service.

If the current UE has already created a PDP context with the network, the created PDP context will be directly adopted; if the current UE has not yet created a PDP context with the network, the UE shall activate a default PDP context, the type of which is usually best effort. The PDP context may be a PDP context for a basic IP service such as WAP or Internet access, or a signaling PDP context for IP Multimedia Sub-system (IMS) access. In this example, the GGSN that corresponds to the default PDP context is GGSN1.

Step 302: the current UE sends an IGMP join message or MLD join message to the GGSN1 through the PDP context created above. With the IP multicast address, the message identifies a certain MBMS bearer service that the user expects to receive. If the IPv4 protocol is adopted, the UE shall send the IGMP join message to the GGSN1; if the IPv6 protocol, the MLD join message will be sent to the GGSN1. In this example, the IPv4 protocol is adopted.

Step 303: the GGSN1 sends an MBMS Authorization Request to the BM-SC after receiving the IGMP/MLD join request, seeking authorization for the current UE to receive the data. If the authorization succeeds, the BM-SC shall send the GGSN1 an MBMS authorization response, which comprises an APN to activate an MBMS UE context. If the MBMS authorization response indicates that the UE is not authorized to receive the MBMS data, the process terminates with no additional message exchange.

Step 304a: the GGSN1 sends an MBMS notification request to the SGSN, the request comprises the IP multicast address, APN and Linked NSAPI. The Linked NSAPI is set equal to the NASPI of the PDP context used by the GGSN1 when GGSN1 receives the join request; the IP multicast address is IP multicasts address of the UE in the join request; the APN may be different from the APN of the default activated PDP context. In some case, the APN may correspond to a GGSN that is different from the GGSN1 receiving the IGMP/MLD join request. If the GGSN1 receives no response, e.g., in the case that the SGSN or the UE does not support MBMS, the GGSN1 needs to start an MBMS activation timer.

Step 304b: the SGSN sends an MBMS notification response to the GGSN1, the response comprises a reason value indicating whether the MBMS UE context is successfully activated. If a response of failure is received, or the MBMS activation timer in the GGSN1 times out, the GGSN1 may step back to the IP multicast access specifications described in 3GPP 29.061.

3GPP 29.061 describes the function of IP multicast access as: providing the function of an IP multicast proxy for the GGSN when there is no MBMS, and point-to-point (PTP) MBMS can thus be provided in a UTMS network through the following functions:
a) The GGSN maintains a mobile station list of one or more multicast groups; when the GGSN receives an IGMP join message or MLD report from a mobile station, it creates/updates the list;
b) Based on the mobile station list maintained, the GGSN sends multicast routing information to the routers attached to the packet switched domains, letting the routers route the multicast data packets;
c) The GGSN replicates multicast data packets on receiving the packets and sends the replicated data packets to every mobile station in the group through a PTP connection.

It should be noted that MBMS is a type of user service which can be realized in two methods: MBMS bearer service and PTP unicast MBMS.

Step 305: the SGSN sends a Request MBMS Context Activation to the UE, asking the UE to activate an MBMS UE context, and the request includes the IP multicast address, APN, linked NSAPI and transaction identifier (TI). Linked NSAPI associates the MBMS UE context, which is provided for the UE, with the PDP context in the IGMP/MLD join message sent by UE in Step 302; TI is chosen by the SGSN and given a value that is not occupied by other activated PDP contexts or MBMS UE contexts of the UE.

Step 306: after creating an MBMS UE context, the UE sends an Activate MBMS Context Request to the SGSN; and the request comprises: IP multicast address, APN, MBMS NSAPI and MBMS bearing capability. The IP multicast address identifies the MBMS bearer service which the UE starts to join/activate; the APN indicates a specific GGSN; the MBMS bearing capability identifies the maximum QoS that the UE can handle; and the MBMS_NSAPI is chosen by the UE and given a value that is not occupied by other activated PDP context or MBMS UE contexts of the UE.

Here, if the SGSN has obtained the MBMS bearer context of the MBMS bearer service, the SGSN shall verify the MBMS bearing capability of the UE; otherwise Step 307 will be performed. If the SGSN determines in the verification process that the MBMS bearing capability of the UE is lower than the required capability, the SGSN shall refuse to activate the requested MBMS context with an appropriate reason, and then terminate the current process.

Step 307: if an MBMS UE context has not been created, the SGSG sends an MBMS Notification Reject Request to the GGSN1, indicating the reason why the MBMS UE context is not created; the GGSN returns an MBMS notification reject response to the SGSN and the current process is terminated, which prevents the SGSN from sending further MBMS notification request.

Step 308: the SGSN performs the security functions on the current UE, e.g., authenticating the UE. This is a step that can be skipped.

Step 309: after determining, according to the APN in Step 304a, a GGSN which actually provides the required MBMS bearer service, the SGSN creates an MBMS UE context and sends a Create MBMS Context Request to it. The request comprises IP multicast address, APN and MBMS_NSAPI. In this example, the GGSN that actually provides the required MBMS bearer service is the GGSN2. In an actual application, the GGSN I and the GGSN2 may be the same GGSN.

Step 310: the GGSN2 sends an MBMS Authorization Request to the BM-SC, seeking authorization to the UE, and the result shall be provided in an MBMS authorization response.

Step 311: the GGSN2 sends an MBMS Registration Request to the BM-SC if the GGSN2 does not have the information of the MBMS bearer context of this MBMS bearer service. The related processes are prescribed in the MBMS standard registration process.

If the BM-SC has not yet assigned a TMGI to the MBMS bearer service, it will now assign a new TMGI that shall be sent to the GGSN and the SGSN in the MBMS Registration Response, and further to the UE in the Activate MBMS Context Accept.

The BM-SC sends an MBMS Registration Response to the GGSN2, which contains the MBMS bearer context of the MBMS bearer service and adds the GGSN2 to the downstream node list. The related processes are prescribed in the MBMS standard registration process.

If the GGSN2 already has the MBMS bearer context of the MBMS bearer service, the step can be skipped.

Step 312: the GGSN2 creates an MBMS UE context and sends a Create MBMS Context Response to the SGSN.

Step 313: the SGSN sends an MBMS Registration Request to the GGSN if the SGSN does not have the information of the MBMS bearer context of the MBMS bearer service. The related processes are prescribed in the MBMS standard registration process.

The GGSN2 responds with an MBMS Registration Request that comprises the MBMS bearer context of the MBMS bearer service and adds the identifier of the SGSN to the parameters of the downstream node list of the MBMS bearer context. The related processes are prescribed in the MBMS standard registration process.

If the SGSN already has the MBMS bearer context of the MBMS bearer service, the step can be skipped.

Step 314: the SGSN provides the RAN with the MBMS UE context if at least one Packet Switched Radio Access Bearer (PS RAB) has been set up for the UE.

Step 315: the SGSN sends an Activate MBMS Context Accept that comprises the MBMS bearing capability to the UE. The MBMS bearing capability identifies the maximum QoS of the MBMS bearer service. When the UE activates more MBMS bearer service, it may take into account the MBMS bearing capability. If the SGSN determines that the MBMS bearing capability of the UE is lower than the capability required by the current MBMS bearer service, the SGSN will refuse the request to activate an MBMS UE context, indicate an appropriate reason, and start a deactivation process of the created MBMS UE context.

It can be noticed in the above activation process that how to create an MBMS UE context is not mentioned in the existing processes, therefore the solution described above is not a complete solution and cannot be put into practice.

Besides, in Steps 303 and 310, the GGSN and BMSC authorize the UE twice, which results in redundant operations, reducing efficiency and increasing signaling traffic. And in Step 309, the SGSN creates an MBMS UE context first while the creation of the MBMS UE context in SGSN will be unwanted if the upstream nodes of the SGSN, such as the GGSN, the BM-SC, cannot create the context,. Thus problems exist in the above process in terms of the processing logic, complexity and resource occupation.

Document 3GPP TS 23.246 V6.3.0 discloses architectural solution and functionalities for MBMS bearer service. Especially, document 3GPP TS 23.246 V6.3.0 discloses an MBMS multicast Service Activation procedure in chapter 8.2. Document WO 2004/034655 discloses a method of establishing MBMS service in SGSN and GGSN.

### Summary of the Invention

The embodiments of the present invention provide methods for activating a Multimedia Broadcast/Multicast Service which could enable the BM-SC to create an MBMS UE context, to perfect the activation process of an MBMS bearer service.

Aspects of the invention are defined in the appended claims.

A method for service activation in MBMS includes the following processes:
an SGSN receives a request for creating an MBMS UE context in the SGSN from a UE which needs to receive an MBMS bearer service;
the SGSN sends a Create MBMS Context Request;
a GGSN which received the Create MBMS Context Request sends an MBMS Authorization Request for authorization;
a BM-SC which received the MBMS Authorization Request creates an MBMS UE context in the BM-SC;
after the BM-SC creates the MBMS UE context in the BM-SC, the GGSN creates an MBMS UE context in the GGSN;
after the GGSN creates the MBMS UE context in the GGSN, the SGSN creates an MBMS UE context in the SGSN.

In this method, the GGSN sending an MBMS Authorization Request for authorization, and the BM-SC which received the MBMS Authorization Request creating the MBMS UE context in the BM-SC includes the following processes:
the GGSN sends the MBMS Authorization Request;
when an authorization by the BM-SC is successful, the BM-SC sends an MBMS Authorization Response including an authorization decision to the GGSN;
the BM-SC creates the MBMS UE context in the BM-SC.

In this method, the GGSN sending the MBMS Authorization Request for authorization, and the BM-SC which received the MBMS Authorization Request creating an MBMS UE context in the BM-SC includes the following processes:
the GGSN sends the MBMS Authorization Request;
when the authorization by the BM-SC is successful, the BM-SC creates the MBMS UE context in the BM-SC;
the BM-SC sends an MBMS Authorization Response including an authorization decision to the GGSN.

In this method, after sending the Create MBMS Context Request by the SGSN, the method further includes the following processes: determine whether the GGSN has registered in the BM-SC for the MBMS bearer service, and register the GGSN in the BM-SC when the GGSN has not registered.

**In the method above, it further recites features as reflected in claims 5-7.**

### Brief Description of the Drawings

Fig.1 is a schematic diagram illustrating the transmission principle of a multicast service.
Fig.2 is a schematic diagram illustrating the structure of a wireless network which supports a broadcast/ multicast service.
Fig.3 is a flow chart for the activation of an MBMS bearer service in the prior art.
Fig.4 is a flow chart of the activation method according to the present invention.
Fig.5 is a flow chart illustrating the detailed processes of Embodiment 1 of this invention.
Fig.6 is a flow chart illustrating the detailed process of Embodiment 2 of this invention.
Fig.7 is a flow chart illustrating the detailed process of Embodiment 3 of this invention.
Fig.8 is a flow chart illustrating the detailed process of Embodiment 4 of this invention.
Fig.9 is a flow chart illustrating the detailed process of Embodiment 5 of this invention.

### Embodiments of the Invention

According to the embodiment of the present invention, in the activation of an MBMS bearer service, a step of the BM-SC creating an MBMS UE context shall be added, after the step in which the UE needing to receive the MBMS bearer service passes the authorization and creates an MBMS UE context in itself and before the step in which the GGSN creates the MBMS UE context.

Through newly added interaction or by the existing interaction between the GGSN and the BM-SC, the BM-SC can create the MBMS UE context at an appropriate moment. The step of the BM-SC creating the MBMS UE context can be performed any time after the UE creating an MBMS UE context and before the GGSN creating the MBMS UE context, e.g., the step can either be taken before or after the GGSN registers in the BM-SC, or be taken during or after the second authorization by the GGSN to the UE that needs to receive the MBMS bearer service currently.

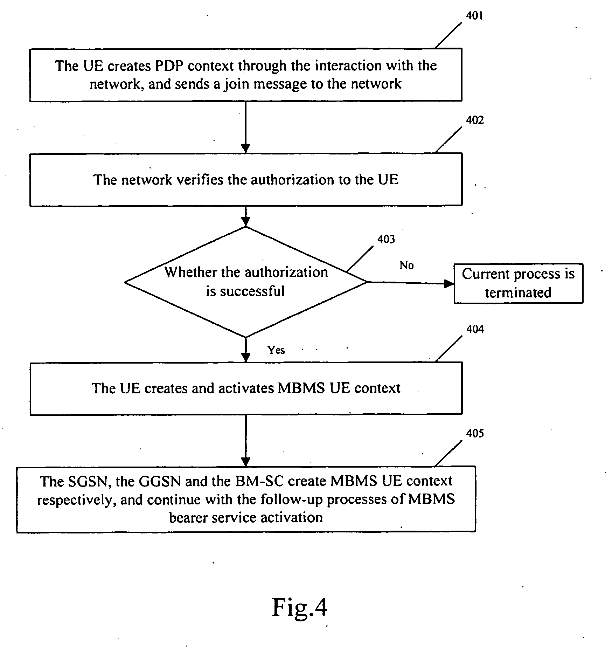

The method provided in this invention for activating an MBMS bearer service is illustrated in Fig.4, which comprises:
Step 401: the UE that needs to receive a certain MBMS bearer service creating a PDP context with the network through the SGSN to which the UE belongs, and sending a join message to the network through the PDP context created. Here the join message is usually sent to the GGSN corresponding to the currently created PDP context.
Steps 402-404: the network verifying the authorization to the UE which sends the join message; if the authorization succeeds, the UE creating and activating an MBMS UE context and then sending an Activate MBMS Context Request to the SGSN, asking the SGSN to create the MBMS UE context in Step 405; otherwise the current process being terminated.

The detailed authorization verification of the network on the UE comprises: as described in Steps 303 - 306 in Fig.3, after receiving a join message from the current UE, the GGSN sending an MBMS Authorization Request to the BM-SC, seeking an authorization for the current UE to receive data; the BM-SC verifying the authorization request and returning to the GGSN an MBMS authorization response, which comprises a specific GGSN APN response message if the authorization succeeds, and after receiving the MBMS authorization response, the GGSN sending an MBMS notification request to the SGSN; when receiving the MBMS notification request, the SGSN returning an MBMS notification response and asking the current UE to activate an MBMS UE context; after receiving the request, the UE returning a response which comprises its MBMS bearing capability; if the above authorization fails, the MBMS authorization response shall carry an indication that the current UE is not authorized to receive the MBMS data, and the process shall be terminated.

Step 405: the SGSN, the GGSN and the BM-SC creating the MBMS UE context, respectively and continuing with the follow-up processing of the MBMS bearer service activation in accordance with the prior art.

The follow-up processing of MBMS bearer service activation comprises: the GGSN registers in the BM-SC and the SGSN registers in the GGSN, i.e. when the GGSN does not have the MBMS bearer context information of the current MBMS bearer service, the GGSN needs to register in the BM-SC, and when the SGSN does not have the MBMS bearer context information of the current MBMS bearer service, the SGSN needs to register in the GGSN.

In fact, the method provided in this invention mainly relates to the changes in the steps from Step 309 to Step 312 in the MBMS bearer service activation of the prior art. In the above process, there are several solutions to the creation of the MBMS UE context by the SGSN and the BM-SC in Step 405, and the major difference between the solutions is the time of the creation of the MBMS UE context. This invention is further described hereinafter with some embodiments, wherein no distinction is made between the default GGSN1 and the GGSN2 which actually provides the MBMS bearer service. The GGSN may include both GGSN1 and GGSN2, or the GGSN1 and the GGSN2 are the same GGSN.

### Embodiment 1:

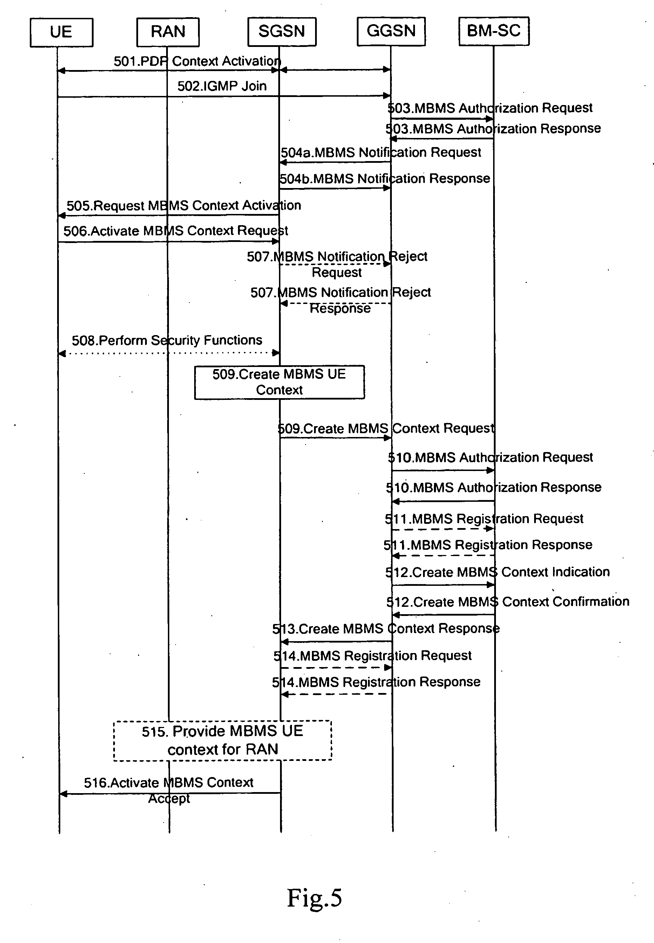

In this embodiment, after the GGSN registering in the BM-SC, new interaction steps, through which the BM-SC creates the MBMS UE context, are added. In this embodiment, the method for activating an MBMS bearer service is illustrated in Fig.5, which comprises:
Steps 501-511 comprise exactly the same process as described in Steps 301 to 311 in the MBMS bearer service activation of the prior art.
Step 512: the GGSN sending to the BM-SC a Create MBMS Context Indication which comprises the IMSI of the MBMS UE context that needs to be created, IP multicast address and APN. These parameters bear the same meanings as those described in the above steps.

After receiving the Create MBMS Context Indication, the BM-SC creates the MBMS UE context and returns a Create MBMS Context Confirmation to the GGSN.

Steps 513-516 comprises exactly the same process as described in Steps 312 to 315 in the MBMS bearer service activation of the prior art.

### Embodiment 2:

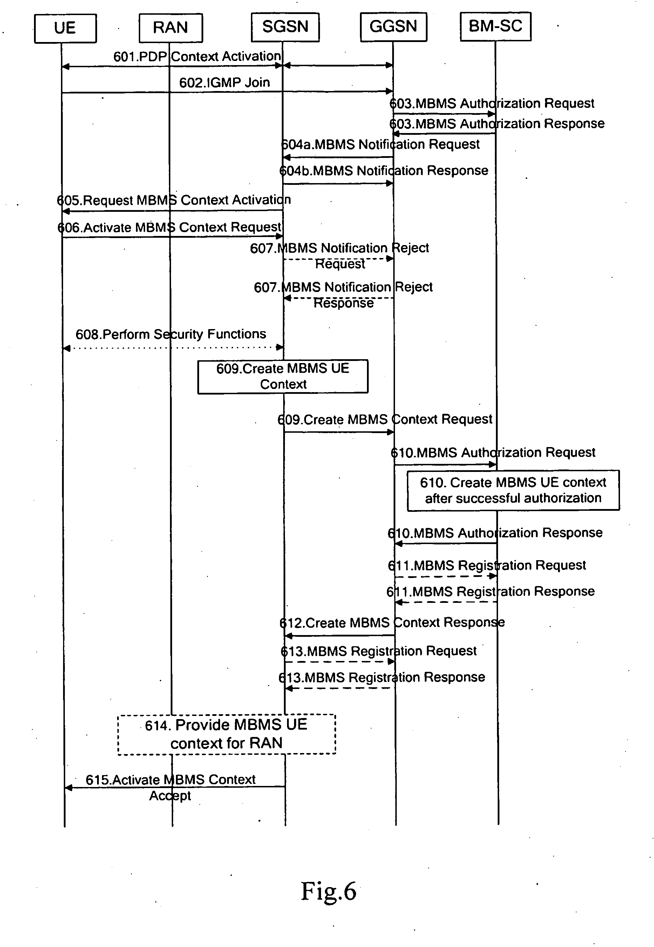

In this embodiment, the creation of the MBMS UE context by the BM-SC is achieved through the existing interaction between the GGSN and the BM-SC during the second authorization by the GGSN to the UE that needs to receive the MBMS bearer service currently. In this embodiment, the method for activating an MBMS bearer service is illustrated in Fig.6, which comprises:
Steps 601-609 comprise exactly the same process as described in Steps 301 to 309 in the MBMS bearer service activation of the prior art.
Step 610: the GGSN sending an MBMS Authorization Request to the BM-SC, seeking authorization to the UE, in other words, asking the BM-SC to authorize the UE that needs to receive the MBMS bearer service currently, then the BM-SC creating the corresponding MBMS UE context if the authorization by the BM-SC is verified to be successful. The result of verification is provided in the MBMS Authorization Response.
Steps 611-615 comprise exactly the same process as described in Steps 311 to 315 in the MBMS bearer service activation of the prior art.

### Embodiment 3:

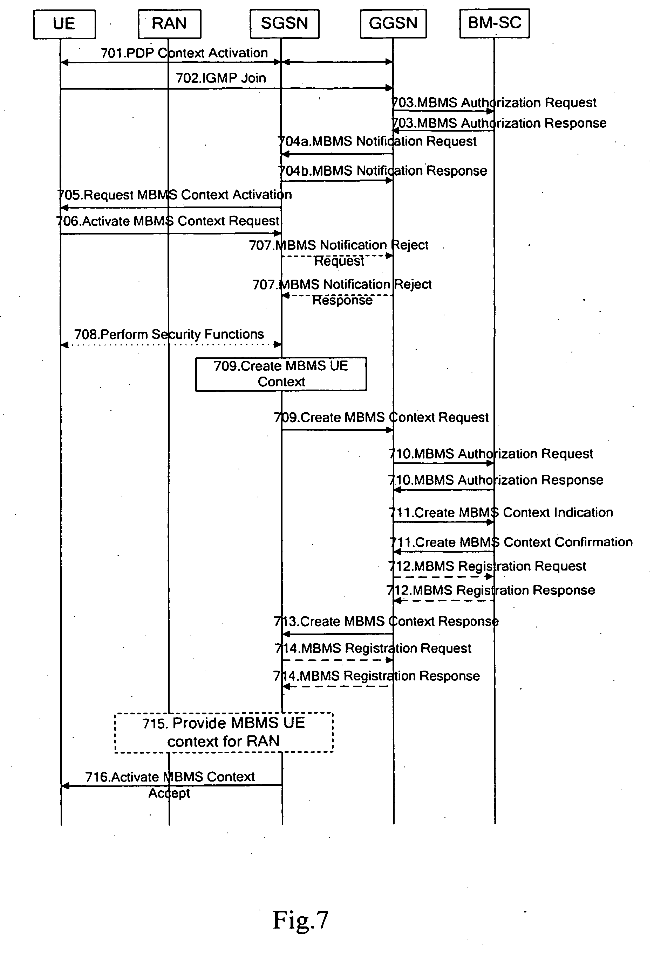

In this embodiment, the BM-SC creates the MBMS UE context through the newly added interaction between the GGSN and the BM-SC after the second authorization by the GGSN to the UE that needs to receive the MBMS bearer service currently and before the GGSN registering in the BM-SC. In this embodiment, the method for activating MBMS bearer service is illustrated in Fig.7, which comprises:
Steps 701-710 comprise exactly the same process as described in Steps 301 to 310 in the MBMS bearer service activation of the prior art.
Step 711: the GGSN sending a Create MBMS Context Indication to the BM-SC, which comprises the IMSI of the MBMS UE context that needs to be created, IP multicast address and APN. These parameters bear the same meanings as those described in the above steps.

And after receiving the Create MBMS Context Indication, the BM-SC creates the MBMS UE context and returns a Create MBMS Context Confirmation to the GGSN.

Steps 712-716 comprise exactly the same process as described in Steps 311 to 315 in the MBMS bearer service activation of the prior art.

### Embodiment 4:

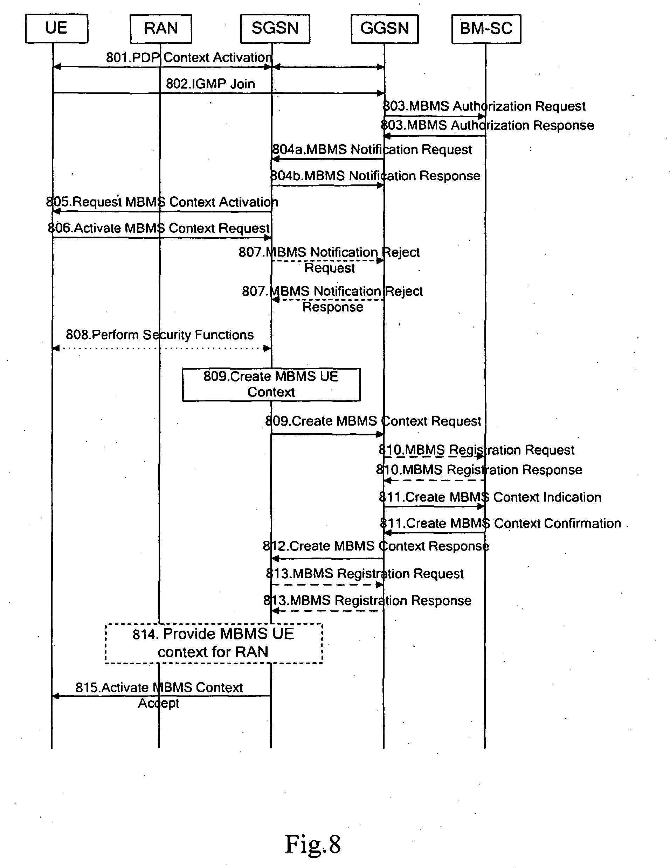

In this embodiment, new interaction steps, through which the BM-SC creates the MBMS UE context, are added after the GGSN registering in the BM-SC. And the second authorization by the GGSN to the UE that needs to receive the MBMS bearer service in the MBMS bearer service activation of the prior art is removed. In this embodiment, the method for activating MBMS bearer service is illustrated in Fig.8, which comprises:
Steps 801-809 comprise exactly the same process as described in Steps 301 to 309 in the MBMS bearer service activation of the prior art.
Step 810 comprises exactly the same process as described in Step 311 in the MBMS bearer service activation of the prior art.
Step 811: the GGSN sending a Create MBMS Context Indication to the BM-SC, which comprises the IMSI of the MBMS UE context that needs to be created, IP multicast address and APN. These parameters bear the same meanings as those described in the above steps.

And after receiving the Create MBMS Context Indication, the BM-SC creates the MBMS UE context and returns a Create MBMS Context Confirmation to the GGSN.

Steps 812-815 comprise exactly the same process as described in Steps 312 to 315 in the MBMS bearer service activation of the prior art.

### Embodiment 5:

In this embodiment, new interaction steps, through which the BM-SC creates the MBMS UE context, are added before the GGSN registering in the BM-SC. And the second authorization by the GGSN to the UE that needs to receive the MBMS bearer service in the MBMS bearer service activation of the prior art is removed. The implementation process of this embodiment is similar to the MBMS bearer service activation process of Embodiment 3 while the only difference between them is that Step 710 in Embodiment 3 is removed here.

### Embodiment 6:

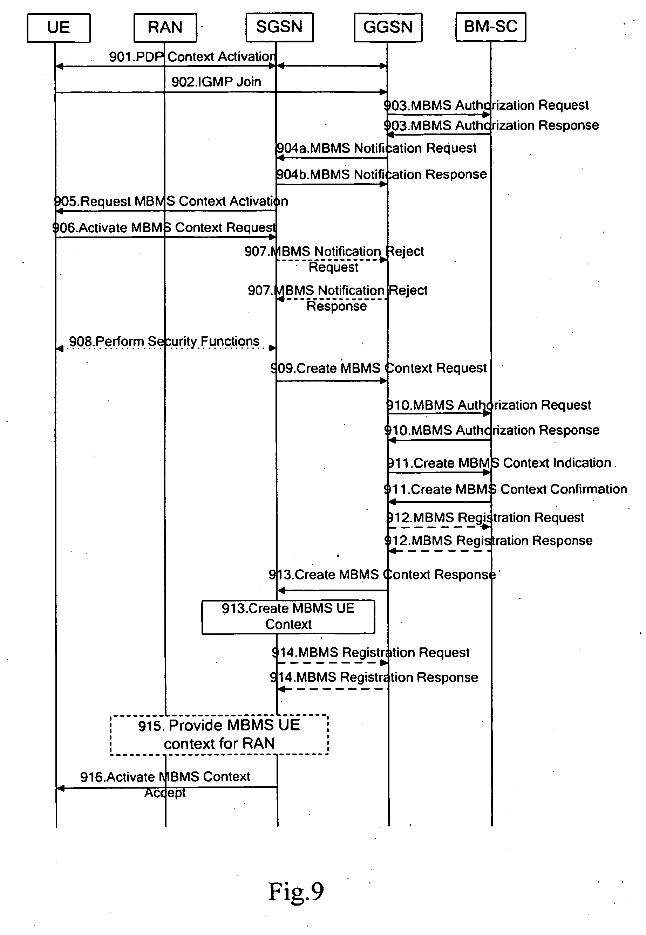

In this embodiment, new interaction steps, through which the BM-SC creates the MBMS UE context, are added after the GGSN registering in the BM-SC. And the SGSN creates the MBMS UE context after the GGSN creates the MBMS UE context. In this embodiment, the method for activating MBMS bearer service is illustrated in Fig.9, which comprises:
Steps 901-908 comprises exactly the same process as described in Steps 301 to 308 in the MBMS bearer service activation of the prior art.
Step 909: the SGSN sending to the GGSN a Create MBMS Context Request, which comprises IP multicast address, APN and MBMS_NSAPI.
Steps 910-912 comprise exactly the same process as described in Steps 510 to 512 in Embodiment 1.
Step 913: the GGSN creating the MBMS UE context and sending a Create MBMS Context Response to the SGSN; the SGSN creating the MBMS UE context after receiving the Create MBMS Context Response from the GGSN.
Steps 914-916 comprise exactly the same process as described in Steps 514 to 516 in Embodiment 1.

### Embodiment 7:

In this embodiment, the creation of the MBMS UE context by the BM-SC is achieved through the existing interaction between the GGSN and the BM-SC during the second authorization by the GGSN to the UE that needs to receive the MBMS bearer service currently. And the SGSN creates the MBMS UE context after the GGSN creates the MBMS UE context. The implementation process of this embodiment is similar to the MBMS bearer service activation process of Embodiment 2, wherein the only difference between them is that the SGSN creates the MBMS UE context in Step 612 instead of Step 609 after receiving the Create MBMS Context Response from the GGSN.

### Embodiment 8:

In this embodiment, the BM-SC creates the MBMS UE context through the newly added interaction between the GGSN and the BM-SC after the second authorization by the GGSN to the UE that needs to receive the MBMS bearer service currently and before the GGSN registers in the BM-SC. And the SGSN creates the MBMS UE context after the GGSN creates the MBMS UE context. The implementation process of this embodiment is similar to the MBMS bearer service activation process of Embodiment 3 wherein the only difference between them is that the SGSN creates the MBMS UE context in Step 713 instead of Step 709 after receiving the Create MBMS Context Response from the GGSN.

### Embodiment 9:

In this embodiment, new interaction steps, through which the BM-SC creates the MBMS UE context, are added after the GGSN registers in the BM-SC. And the SGSN creates the MBMS UE context after the GGSN creates the MBMS UE context while the second authorization of the GGSN to the UE that needs to receive MBMS bearer service in the MBMS bearer service activation of the prior art is removed. The implementation process of this embodiment is similar to the MBMS bearer service activation process of Embodiment 6, wherein the only difference between them is that Step 910 in Embodiment 6 is removed here.

### Embodiment 10:

In this embodiment, new interaction steps, through which the BM-SC creates the MBMS UE context, are added before the GGSN registers in the BM-SC. And the second authorization by the GGSN to the UE that needs to receive the MBMS bearer service in the MBMS bearer service activation of the prior art is removed while the SGSN creates the MBMS UE context after the GGSN creates the MBMS UE context. The implementation process of this embodiment is similar to the MBMS bearer service activation process of Embodiment 3, wherein the difference between them is that the SGSN creates the MBMS UE context in Step 713 instead of Step 709 after receiving the Create MBMS Context Response from the GGSN, and Step 710 in Embodiment 3 is removed.

The foregoing is only embodiments of this invention and is not for use in limiting the protection scope of the invention. It should be noted to those skilled in the art that various changes and modifications can be made without departing from the present invention and therefore will be covered by the protection scope as set by the appended claims.

## Claims

1. A method for service activation in Multimedia Broadcast/Multicast Service MBMS, **characterized by**:
receiving(501, 601, 701, 801,901), by a Serving GPRS Support Node SGSN, a request for creating an MBMS UE context in the SGSN from a User Equipment UE which needs to receive an MBMS bearer service;
sending (509, 609, 709, 809, 909), by the SGSN, a Create MBMS Context Request;
sending (910), by a Gateway GPRS Support Node GGSN which received the Create MBMS Context Request, an MBMS Authorization Request for authorization;
creating (911) an MBMS UE context in a Broadcast/Multicast Service Center BM-SC which received the MBMS Authorization Request;
after the BM-SC creating the MBMS UE context in the BM-SC , creating an MBMS UE context in the GGSN; and
after the GGSN creating the MBMS UE context in the GGSN, creating (913) the MBMS UE context in the SGSN.

2. The method of claim 1, wherein the GGSN sending the MBMS Authorization Request for authorization, and creating the MBMS UE context in the BM-SC comprise:
sending (910), by the GGSN, the MBMS Authorization Request;
when an authorization by the BM-SC is successful, sending (910), by the BM-SC, an MBMS Authorization Response including an authorization decision to the GGSN; and
creating, by the BM-SC, the MBMS UE context in the BM-SC.

3. The method of claim 1, wherein the GGSN sending the MBMS Authorization Request for authorization, and creating the MBMS UE context in the BM-SC comprise:
sending (910), by the GGSN, the MBMS Authorization Request; when the authorization by the BM-SC is successful, creating, by the BM-SC, the MBMS UE context in the BM-SC; and
sending (910), by the BM-SC, an MBMS Authorization Response including an authorization decision to the GGSN.

4. The method of claim 2 or 3, after sending the Create MBMS Context Request by the SGSN, further comprising: determining (511, 611, 712, 810, 912) whether the GGSN has registered in the BM-SC for the MBMS bearer service, and
registering (511, 611, 712, 810, 912) the GGSN in the BM-SC when the GGSN has not registered.

5. The method of claim 1, further comprising: sending (509, 609, 709, 809, 909), by the GGSN, to the BM-SC a indication for creating the MBMS context in the BM-SC.

6. The method of claim 5, wherein the step of the GGSN sending to the BM-SC the indication is after the step of the GGSN sending the MBMS Authorization Request for authorization and before a step of the BM-SC returning a MBMS Authorization Response to the GGSN.

7. The method of claim 5, wherein the step of the GGSN sending to the BM-SC the indication is after both the step of the GGSN sending the MBMS Authorization Request for authorization and the step of the BM-SC returning a MBMS Authorization Response to the GGSN.

## Patentansprüche

1. Verfahren zur Dienstaktivierung beim Multimedia Broadcast/Multicast Service MBMS, **gekennzeichnet durch** die folgenden Schritte:
Empfangen (501, 601, 701, 801, 901) einer Anforderung **durch** einen Serving GPRS Support Node SGSN zum Erzeugen eines Kontexts des MBMS UE in dem SGSN aus einem User Equipment UE, das einen MBMS-Trägerdienst erhalten muss;
Senden (509, 609, 709, 809, 909) einer Create MBMS Context Request **durch** den SGSN;
Senden (910) einer MBMS Authorization Request **durch** einen Gateway GPRS Support Node GGSN, der die Create MBMS Context Request empfangen hat, zur Autorisierung;
Erzeugen (911) eines Kontexts des MBMS UE in einem Broadcast/Multicast Service Centre BM-SC, das die MBMS Authorization Request empfangen hat;
nachdem das BM-SC den Kontext des MBMS UE in dem BM-SC erzeugt hat, Erzeugen eines Kontexts des MBMS UE in dem GGSN; und
nachdem der GGSN den Kontext des MBMS UE in dem GGSN erzeugt hat, Erzeugen (913) des Kontexts des MBMS UE in dem SGSN.

2. Verfahren nach Anspruch 1, wobei das Senden der MBMS Authorization Request durch den GGSN zur Autorisierung und das Erzeugen des Kontexts des MBMS UE in dem BM-SC Folgendes umfassen:
Senden (910) der MBMS Authorization Request durch den GGSN;
wenn eine Autorisierung durch das BM-SC erfolgreich ist, Senden (910) einer MBMS Authorization Response durch das BM-SC, die eine Autorisierungsentscheidung enthält, zu dem GGSN; und
Erzeugen des Kontexts des MBMS UE durch das BM-SC in dem BM-SC.

3. Verfahren nach Anspruch 1, wobei das Senden der MBMS Authorization Request durch den GGSN zur Autorisierung und das Erzeugen des Kontexts des MBMS UE in dem BM-SC Folgendes umfassen:
Senden (910) der MBMS Authorization Request durch den GGSN; wenn die Autorisierung durch das BM-SC erfolgreich ist, Erzeugen des Kontexts des MBMS UE durch das BM-SC in dem BM-SC; und
Senden (910) einer MBMS Authorization Response durch das BM-SC, die eine Autorisierungsentscheidung enthält, zu dem GGSN.

4. Verfahren nach Anspruch 2 oder 3, das nach dem Senden der Create MBMS Context Request durch den SGSN ferner Folgendes umfasst: Bestimmen (511, 611, 712, 810, 912), ob sich der GGSN bei dem BM-SC für den MBMS-Trägerdienst registriert hat; und
Registrieren (511, 611, 712, 810, 912) des GGSN in dem BM-SC, wenn sich der GGSN nicht registriert hat.

5. Verfahren nach Anspruch 1, ferner mit dem folgenden Schritt: Senden (509, 609, 709, 809, 909) einer Indikation zum Erzeugen des MBMS-Kontexts in dem BM-SC durch den GGSN zu dem BM-SC.

6. Verfahren nach Anspruch 5, wobei der Schritt des Sendens der Indikation durch den GGSN zu dem BM-SC nach dem Schritt des Sendens der MBMS Authorization Request durch den GGSN zur Autorisierung und vor einem Schritt des Zurückgebens einer MBMS Authorization Response durch das MB-SC an den GGSN erfolgt.

7. Verfahren nach Anspruch 5, wobei der Schritt des Sendens der Indikation zu dem BM-SC durch den GGSN sowohl nach dem Schritt des Sendens der MBMS Authorization Request durch den GGSN zur Autorisierung als auch nach dem Schritt des Zurückgebens einer MBMS Authorization Response an den GGSN durch das BM-SC erfolgt.

## Revendications

1. Procédé d'activation de service dans un Service de diffusion / multidiffusion multimédia, MBMS, **caractérisé par** les étapes consistant à :
faire recevoir (501, 601, 701, 801, 901), par un noeud de support du GPRS de desserte, SGSN, une demande de création d'un contexte MBMS d'UE au niveau du SGSN,
émanant d'un Équipement d'utilisateur (UE) qui doit recevoir un service de support MBMS ;
faire émettre (509, 609, 709, 809, 909), par le SGSN, une demande de création d'un contexte MBMS ;
faire émettre (910), par un noeud de support GPRS de passerelle, GGSN, ayant reçu la demande de création d'un contexte MBMS, une demande d'autorisation de MBMS en vue d'une autorisation ;
créer (911) un contexte MBMS d'UE au niveau d'un Centre de service de diffusion /multidiffusion, BM-SC, ayant reçu la demande d'autorisation de MBMS ;
après la création par le BM-SC du contexte MBMS d'UE au niveau du BM-SC, créer un contexte MBMS d'UE au niveau du GGSN ; et
après la création par le GGSN du contexte MBMS d'UE au niveau du GGSN, créer (913) le contexte MBMS d'UE au niveau du SGSN.

2. Procédé selon la revendication 1, l'émission par le GGSN de la demande d'autorisation de MBMS en vue d'une autorisation et la création du contexte MBMS d'UE au niveau du BM-SC comportant les étapes consistant à :
faire émettre (910), par le GGSN, la demande d'autorisation de MBMS ;
lorsqu'une autorisation par le BM-SC a réussi, faire envoyer (910) par le BM-SC au GGSN une réponse d'autorisation de MBMS comprenant une décision d'autorisation ; et
faire créer, par le BM-SC, le contexte MBMS d'UE au niveau du BM-SC.

3. Procédé selon la revendication 1, l'émission par le GGSN de la demande d'autorisation de MBMS en vue d'une autorisation et la création du contexte MBMS d'UE au niveau du BM-SC comportant les étapes consistant à :
faire émettre (910), par le GGSN, la demande d'autorisation de MBMS ;
lorsque l'autorisation par le BM-SC a réussi, faire créer, par le BM-SC, le contexte MBMS d'UE au niveau du BM-SC ; et
faire émettre (910) par le BM-SC au GGSN une réponse d'autorisation de MBMS comprenant une décision d'autorisation.

4. Procédé selon la revendication 2 ou 3, comportant en outre, après avoir fait émettre par le SGSN une demande de création d'un contexte MBMS, les étapes consistant à :
déterminer (511, 611, 712, 810, 912) si le GGSN s'est inscrit auprès du BM-SC pour le service de support MBMS ; et
inscrire (511, 611, 712, 810, 912) le GGSN auprès du BM-SC lorsque le GGSN ne s'est pas inscrit.

5. Procédé selon la revendication 1, comportant en outre l'étape consistant à : faire émettre (509, 609, 709, 809, 909) au BM-SC, par le GGSN, une indication en vue de créer le contexte MBMS au niveau du BM-SC.

6. Procédé selon la revendication 5, l'étape d'émission par le GGSN de l'indication au BM-SC étant postérieure à l'étape d'émission par le GGSN de la demande d'autorisation de MBMS en vue d'une autorisation et antérieure à une étape de renvoi par le BM-SC au GGSN d'une réponse d'autorisation de MBMS.

7. Procédé selon la revendication 5, l'étape d'émission par le GGSN de l'indication au BM-SC étant postérieure à la fois à l'étape d'émission par le GGSN de la demande d'autorisation de MBMS en vue d'une autorisation et à l'étape de renvoi par le BM-SC au GGSN d'une réponse d'autorisation de MBMS.
